# EUROPEAN PATENT APPLICATION

(11) **EP 4 836 473 A1**
(43) Date of publication of application: **04.11.2026**
(21) Application number: 23962887.8
(22) Date of filing: 29.12.2023
(51) Int. Cl.: H04W 12/033

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN); LIU, Xuefeng, Dongguan, Guangdong 523860 (CN); LIU, Wenya, Dongguan, Guangdong 523860 (CN); GONG, Dan, Dongguan, Guangdong 523860 (CN)
(74) Representative: Mewburn Ellis LLP
(86) International application number: PCT/CN2023/143553
(87) International publication number: WO 2025/138213

(57) **Abstract**

The present disclosure relates to a communication method and device, a computer-readable storage medium, a computer program product, and a computer program. The method includes the following. An authentication request is sent to a first network device of a first network, where the authentication request carries a first credential for authenticating the terminal, the first credential is calculated based on a first key between a first core network device of the first network and a second core network device of a second network, and the terminal belongs to the second network.

## Description

### TECHNICAL FIELD

The present disclosure relates to the field of communications, and more specifically, to a communication method and device.

### BACKGROUND

In the related art, a roaming protocol refer to a protocol in a mobile communication network that allows a terminal to switch between and use services across different operator networks. These protocols enable a user to communicate through a network of another operator even when the user leaves a coverage region of a network of its home operator. The establishment and implementation of roaming protocols help improve user experience, allowing terminals to freely switch between different operator-maintained networks in different regions. However, during roaming, ensuring the efficiency of the access of the terminal to a roaming network (i.e., a network to which the terminal does not belong) becomes a problem that needs to be solved.

### SUMMARY

Embodiments of the present disclosure provide a communication method and device.

Embodiments of the present disclosure provide a communication method performed by a terminal. The method includes the following. An authentication request is sent to a first network device of a first network, where the authentication request carries a first credential for authenticating the terminal, the first credential is calculated based on a first key between a first core network device of the first network and a second core network device of a second network, and the terminal belongs to the second network.

Embodiments of the present disclosure provide a communication method performed by an access network device. The method includes the following. An authentication request is received from a terminal, where the authentication request carries a first credential for authenticating the terminal, the first credential is calculated based on a first key between a first core network device of a first network and a second core network device of a second network, the terminal belongs to the second network, and the access network device belongs to the first network.

Embodiments of the present disclosure provide a communication method performed by a first core network device. The method includes the following. An authorization request is received from an access network device, where the authorization request carries a first credential for authenticating a terminal, the first credential is calculated based on a first key between the first core network device of a first network and a second core network device of a second network, the terminal belongs to the second network, and the access network device belongs to the first network.

Embodiments of the present disclosure provide a communication method performed by a second core network device The method includes the following. A first resource response message is sent to a terminal, where the first resource response message carries a first credential for authenticating the terminal, the first credential is calculated based on a first key between a first core network device of a first network and a second core network device of a second network, and the terminal belongs to the second network.

Embodiments of the present disclosure provide a communication method performed by the first core network device. The present disclosure includes the following. An authentication request is received from a terminal, where the authentication request carries a first credential for authenticating the terminal, the first credential is calculated based on a first key between the first core network device of a first network and a second core network device of a second network, and the terminal belongs to the second network.

Embodiments of the present disclosure provide a terminal. The terminal includes a first communicating unit. The first communicating unit is configured to send an authentication request to a first network device of a first network, where the authentication request carries a first credential for authenticating the terminal, the first credential is calculated based on a first key between a first core network device of the first network and a second core network device of a second network, and the terminal belongs to the second network.

Embodiments of the present disclosure provide an access network device. The access network device includes a second communicating unit. The second communicating unit is configured to receive an authentication request from a terminal, where the authentication request carries a first credential for authenticating the terminal, the first credential is calculated based on a first key between a first core network device of a first network and a second core network device of a second network, the terminal belongs to the second network, and the access network device belongs to the first network.

Embodiments of the present disclosure provide a first core network device. The first core network device includes a third communicating unit. The third communicating unit is configured to receive an authorization request from an access network device, where the authorization request carries a first credential for authenticating a terminal, the first credential is calculated based on a first key between the first core network device of a first network and a second core network device of a second network, the terminal belongs to the second network, and the access network device belongs to the first network.

Embodiments of the present disclosure provide a second core network device. The second core network device includes a communicating unit. The fourth communicating unit is configured to send a first resource response message to a terminal, where the first resource response message carries a first credential for authenticating the terminal, the first credential is calculated based on a first key between a first core network device of a first network and a second core network device of a second network, and the terminal belongs to the second network.

Embodiments of the present disclosure provide a first core network device. The first core network device includes a third communicating unit. The third communicating unit is configured to receive an authentication request from a terminal, where the authentication request carries a first credential for authenticating the terminal, the first credential is calculated based on a first key between the first core network device of a first network and a second core network device of a second network, and the terminal belongs to the second network.

By adopting the above scheme, when the terminal belonging to the second network accesses the first network, the authentication request carrying the first credential is sent to a network device of the first network. Since the first credential is calculated based on the key between the first core network device of the first network and the second core network device of the second network, the terminal can be authenticated on the first network side through the first credential. In this way, when the terminal needs to access another network, the terminal can be authenticated simply through the first credential, which can improve authentication efficiency while ensuring security.

### BRIEF DESCRIPTION OF THE DRAWINGS

FIG. 1 is a schematic diagram of an application scenario according to an embodiment of the present disclosure.
FIG. 2 is a schematic flowchart of a communication method according to an embodiment of the present disclosure.
FIG. 3 is a schematic flowchart of a communication method according to another embodiment of the present disclosure.
FIG. 4 is a schematic flowchart of a communication method according to another embodiment of the present disclosure.
FIG. 5 is a schematic flowchart of a communication method according to another embodiment of the present disclosure.
FIG. 6 is a schematic flowchart of a communication method according to another embodiment of the present disclosure.
FIG. 7 is a schematic flowchart of issuance of a primary credential according to an embodiment of the present disclosure.
FIG. 8 is a schematic flowchart of issuance of a secondary credential according to an embodiment of the present disclosure.
FIG. 9 is a schematic flowchart of access by a terminal using a secondary credential according to an embodiment of the present disclosure.
FIG. 10 is a schematic flowchart of denial-of-service by a first core network device according to an embodiment of the present disclosure.
FIG. 11 is a schematic flowchart of the processing of claims for a second core network device according to an embodiment of the present disclosure.
FIG. 12 is a schematic flowchart of a communication method according to another embodiment of the present disclosure.
FIG. 13 is a schematic block diagram of a terminal according to an embodiment of the present disclosure.
FIG. 14 is a schematic block diagram of an access network device according to an embodiment of the present disclosure.
FIG. 15 is a schematic block diagram of a first core network device according to an embodiment of the present disclosure.
FIG. 16 is a schematic block diagram of a second core network device according to an embodiment of the present disclosure.

### DETAILED DESCRIPTION

The technical solutions of the embodiments of the present disclosure can be applied to various communication systems, such as long term evolution (LTE), LTE-advanced (LTE-A), new radio (NR), NR evolution, wireless local area network (WLAN), WiFi, or other communication systems.

The present disclosure describes various embodiments with reference to with a network device and a terminal. The terminal can be mobile or fixed, and can also be referred to as a mobile station, user unit, etc. The terminal can be a station in a WLAN, or a smart terminal, wireless modem, laptop, tablet, etc. In embodiments of the present disclosure, the terminal can be a virtual reality (VR) terminal/ augmented reality (AR) terminal, industrial control terminal, autonomous driving terminal, telemedicine terminal, smart grid terminal, transportation safety terminal, smart city terminal, or smart home wireless terminal, etc. By way of example and not limitation, in embodiments of the present disclosure, the terminal can also be a wearable device.

In this embodiment of the present disclosure, the network device can be a device for communicating with the terminal. The network device can be an access point in a WLAN, an evolved base station in LTE, a relay station, or a network device (gNB) in a vehicle-mounted device, wearable device, or NR network, or a network device in a future evolved public land mobile network (PLMN) network, or a network device in a non-terrestrial network, etc. By way of example and not limitation, in embodiments of the present disclosure, the network device can have mobility characteristics, for example, the network device can be a mobile device.

To facilitate understanding of the technical solutions of embodiments of the present disclosure, the relevant technologies of the embodiments of the present disclosure are described below. The following relevant technologies are optional solutions and can be arbitrarily combined with the technical solutions of the embodiments of the present disclosure, all of which fall within the protection scope of the embodiments of the present disclosure.

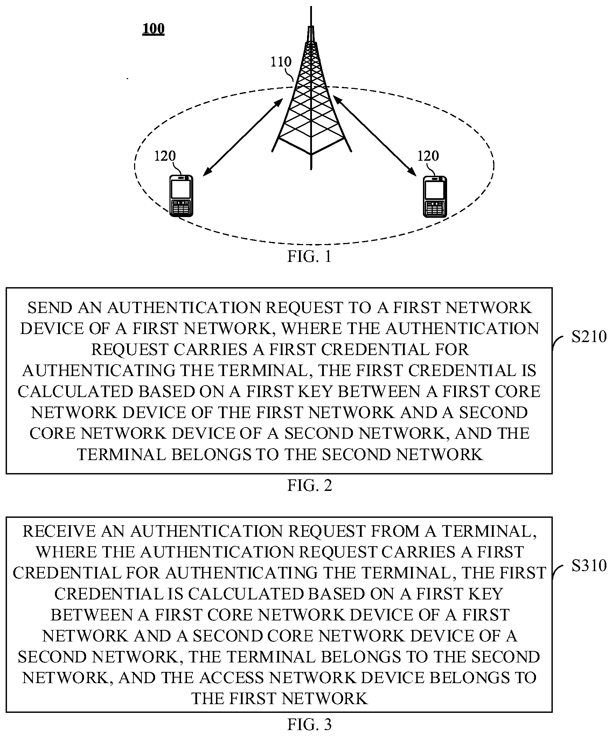

FIG. 1 exemplarily illustrates a communication system 100. The communication system includes a network device 110 and two terminals 120. In one possible embodiment, the communication system 100 may include multiple network devices 110, and other numbers of terminals 120 may be included in a coverage area of each network device 110, which is not limited in embodiments of the present disclosure. In one possible embodiment, the communication system 100 may also include a mobility management entity, an access and mobility management function, and other network entities, which is not limited in embodiments of the present disclosure. The network device may include an access network device and a core network device. That is, the communication system may also include multiple core networks for communicating with an access network device. The access network device may be base stations in LTE, LTE-A, or NR systems. Taking the communication system illustrated in FIG. 1 as an example, a communication device may include a network device and a terminal with communication functions. The communication device may also include other devices in the communication system, such as a network controller, a mobility management entity, and other network entities, which is not limited in embodiments of the present disclosure.

FIG. 2 is a schematic flowchart of a communication method performed by a terminal according to an embodiment of the present disclosure. The method includes at least some of the following.

At S210, an authentication request is sent to a first network device of a first network, where the authentication request carries a first credential for authenticating the terminal, the first credential is calculated based on a first key between a first core network device of the first network and a second core network device of a second network, and the terminal belongs to the second network.

FIG. 3 is a schematic flowchart of a communication method performed by an access network device according to an embodiment of the present disclosure. The method includes at least some of the following.

At S310, an authentication request is received from a terminal, where the authentication request carries a first credential for authenticating the terminal, the first credential is calculated based on a first key between a first core network device of a first network and a second core network device of a second network, the terminal belongs to the second network, and the access network device belongs to the first network.

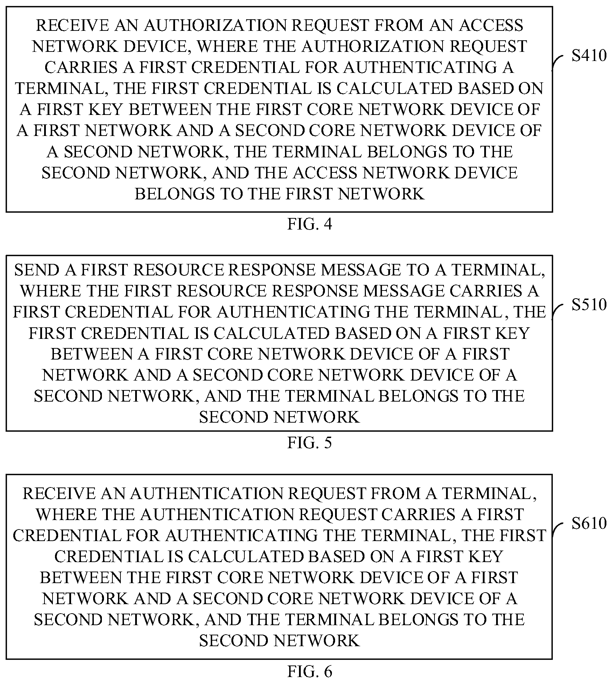

FIG. 4 is a schematic flowchart of a communication method performed by a first core network device according to an embodiment of the present disclosure. The method includes at least some of the following.

At S410, an authorization request is received from an access network device, where the authorization request carries a first credential for authenticating a terminal, the first credential being calculated based on a first key between the first core network device of a first network and a second core network device of a second network, the terminal belongs to the second network and the access network device belongs to the first network.

FIG. 5 is a schematic flowchart of a communication method performed by a second core network device according to an embodiment of the present disclosure. The method includes at least some of the following.

At S510, a first resource response message is sent to a terminal, where the first resource response message carries a first credential for authenticating the terminal, the first credential being calculated based on a first key between a first core network device of a first network and a second core network device of a second network, and the terminal belongs to the second network.

FIG. 6 is a schematic flowchart of a communication method performed by a first core network device according to an embodiment of the present disclosure. The method includes at least some of the following.

At S610, an authentication request is received from a terminal, where the authentication request carries a first credential for authenticating the terminal, the first credential being calculated based on a first key between the first core network device of a first network and a second core network device of a second network, and the terminal belongs to the second network.

The first core network device and the second core network device belong to different networks. The first network and the second network are different, and the first network and the second network belong to different operators, or the first network and the second network are managed by different operators.

The function of the first core network device can be: to be responsible for and manage resources (or spectrum resources) of the first network, and to meet communication needs of subscribed devices of the first network in mobile communication. The function of the second core network device can be: to be responsible for and manage resources (or spectrum resources) of the second network, and to meet the communication needs of subscribed devices of the second network in mobile communication. Device types of the first core network device and the second core network device are not limited in embodiments. For example, the first core network device and the second core network device can be control plane network elements in their respective networks, etc. The possible device types of the first core network device and the second core network device are not limited or exhaustively listed here.

The terminal belonging to the network of the second core network device means that the terminal is a subscribed terminal of the second network. In other words, the second network is a home network of the terminal. The first network refers to a roaming network of the terminal.

The first network device may include one of the following: an access network device or a first core network device. That is, the authentication request of the terminal can be sent to the access network device of the first network, or the authentication request of the terminal can be sent to the first core network device of the first network. Herein, the first core network device may refer to a core network device in a roaming network of the terminal, and the access network device may refer to an access network device in the roaming network of the terminal.

In some possible embodiments, the first credential is generated based on the first key between the first core network device and the second core network device, and the first key between the first core network device and the second core network device is encrypted and carried in a second credential. The process of generating and issuing the second credential needs to be performed first between the first core network device and the second core network device.

On the second core network device side, the method may further include the following. A second resource request message is sent to the first core network device, where the second resource request message is used to request use of a second resource of the first network. The second credential is downloaded from a blockchain, where the second credential includes the first key encrypted based on a public key of the second core network device.

On the first core network device side, the method may further include the following. A second resource request message is received from the second core network device, where the second resource request message is used to request use of the second resource of the first network. A second resource response message is uploaded to the blockchain, where the second resource response message indicates permission for the second core network device to use the second resource of the first network, the second resource response message carries the second credential, and the second credential includes the first key encrypted based on the public key of the second core network device.

Since the second credential involves an interaction process at the core network level of the two networks, allocation or issuance of the second credential shall be completed before the terminal uses the first credential to access the network where the first core network device is located. Therefore, in some possible examples, the second credential may also be referred to as a primary credential.

In one embodiment, the second resource request message may carry at least one of the following: a first signature, information about the second resource of the first network requested to be used, or an identifier of the second core network device.

Herein, the identifier of the second core network device can be used by the first core network device to determine the identity of the device sending the second resource request message.

The first signature can be calculated based on a private key of the second core network device and at least one of the following parameters: the identifier of the second core network device, or information about the second resource of the first network requested to be used. A signature algorithm used to calculate the first signature can be configured according to actual conditions.

For example, the first signature can be calculated as follows. The first signature is obtained by using a signature algorithm calculate at least one of the identifier of the second core network device or the information about the second resource of the first network requested to be used based on the private key of the second core network device.

For example, the first signature can be calculated as follows. A hash calculation is performed based on at least one of the identifier of the second core network device or the information about the second resource of the first network requested to be used to obtain a first hash value. The first hash value is encrypted based on the private key of the second core network device to obtain the first signature.

It can be understood that the parameter used to calculate the first signature and the other parameters carried in the second resource request message, excluding the first signature, can be the same or partially the same. For example, in addition to the first signature, the second resource request message carries the identifier of the second core network device and the information about the second resource of the first network requested to be used; and the first signature can be calculated using either the identifier of the second core network device or the information about the second resource of the first network requested to be used. For another example, the second resource request message carries the identifier of the second core network device and the information about the second resource of the first network requested to be used; and the first signature be also calculated using the identifier of the second core network device and the information about the second resource of the first network requested to be used.

The information about the second resource of the first network requested to be used refers to relevant information about the second resource of the first network requested to be used by the second core network device. The resource can refer to time-domain resources and/or frequency-domain resources.

Specifically, the information about the second resource of the first network requested to be used can include at least one of the following: an identifier of the first core network device, an identifier (or number) of the second resource of the first network requested to be used, a usage period of the second resource of the first network requested to be used, or a price of the second resource of the first network requested to be used.

The number of second resources of the first network requested to be used by the second core network device can be one or more. In other words, the second resource requested to be used by the second core network device can be one or more resources among all resources supported or managed by the network (first network) where the first core network device is located. The second core network device can indicate which one or more resources in the first network to be requested to be used through the identifier of each second resource. That is, the identifier of the second resource of the first network requested to be used can refer to the identifier of each of at least one second resource requested to be used by the second core network device among all resources of the first network.

The usage period of the second resource of the first network requested to be used can include at least one of the following: a start time of usage of the second resource of the first network requested to be used, an end time of usage of the second resource of the first network requested to be used, or an effective duration of the second resource of the first network requested to be used.

For example, the usage period of the second resource of the first network requested to be used can only include the end time of usage of the second resource of the first network requested to be used. Correspondingly, the first core network device can take a moment at which the second resource request message is received as the start time of usage of the second resource of the first network requested to be used.

For example, the usage period of the second resource of the first network requested to be used may only include the effective duration of the second resource of the first network requested to be used. Correspondingly, the first core network device may take a moment at which the second resource request message is received as the start time of the effective duration of the second resource of the first network requested to be used.

For example, the usage period of the second resource of the first network requested to be used may include a start time of usage of the second resource of the first network requested to be used and an end time of usage of the second resource of the first network requested to be used.

For example, the usage period of the second resource of the first network requested to be used may include a start time of usage of the second resource of the first network requested to be used and an effective duration of the second resource of the first network requested to be used.

It can be understood that the above is only an exemplary description. In actual processing, the usage period of the second resource of the first network requested to be used may also be indicated in other ways, which are not limited or exhaustively listed in herein.

The price of the second resource of the first network requested to be used can refer to a total price for using the second resource of the first network during the usage period of the second resource requested to be used. This price can be calculated based on a unit price of each second resource in the network where the first core network device is located and the usage period. The specific calculation method and definition of the unit price are not limited herein.

In one embodiment, after receiving the second resource request message from the second core network device, the first core network device can first verify reliability of the second resource request message, and generate the second credential if the verification is successful.

Herein, the reliability of the second request message can be verified by at least one of the following: verifying the second core network device based on the first signature; or checking the information about the second resource of the first network requested to be used. Accordingly, successful verification may refer to: if only the processing of verifying the second core network device based on the first signature is performed, then the verification is determined to be successful when the verification of the second core network device is successful; if only the processing of checking the information about the second resource of the first network requested to be used is performed, the verification is determined to be successful when the information about the second resource of the first network requested to be used is checked to be correct; and if the second core network device is verified based on the first signature and the information about the second resource of the first network requested to be used is checked, the verification is determined to be successful when the verification of the second core network device is successful and the information about the second resource of the first network requested to be used is checked to be correct.

Optionally, the second core network device is verified based on the first signature as follows. The second core network device is verified based on the public key of the second core network device, the first signature, and at least one of the following other information carried in the second resource request message: the identifier of the second core network device, or the information about the second resource of the first network requested to be used.

The public key of the second core network device may be publicly available on the blockchain, and the first core network device may obtain the public key of the second core network device from the blockchain. For example, the first core network device may obtain the public key of the second core network device from the blockchain based on the identifier of the second core network device.

The signature verification algorithm used to verify the first signature should correspond to the algorithm used to calculate the first signature; and the parameter used to verify the first signature should be the same as the parameter used to calculate the first signature.

For example, suppose the first signature is calculated based on the identifier of the second core network device and the information about the second resource of the first network requested to be used. The second core network device can be verified based on the first signature as follows. The signature verification algorithm is used to decrypt the first signature based on the public key of the second core network device to obtain parameters to be verified. The second core network device is verified based on the parameters to be verified, the identifier of the second core network device, and the information about the second resource of the first network requested to be used.

The second core network device is verified based on the parameters to be verified, the identifier of the second core network device, and the information about the second resource of the first network requested to be used by at least one of the following: if the parameters to be verified are the same as the identifier of the second core network device and the information about the second resource of the first network requested to be used, the verification of the second core network device is determined to succeed; or if the parameters to be verified are different from the identifier of the second core network device and the information about the second resource of the first network requested to be used, the verification of the second core network device to be determined to fail.

For example, suppose the first signature is calculated based on the identifier of the second core network device and the information about the second resource of the first network requested to be used. The second core network device is verified based on the first signature as follows. A hash calculation is performed based on the identifier of the second core network device and the information about the second resource of the first network requested to be used to obtain a first verification hash value. The first signature is decrypted based on the public key of the second core network device to obtain a first decryption value. The second core network device is verified based on the first decryption value and the first verification hash value. The second core network device is verified based on the first decryption value and the first verification hash value by at least one of the following: if the first decryption value and the first verification hash value are the same, the verification of the second core network device is successful; or if the first decryption value and the first verification hash value are different, the verification of the second core network device fails.

It may be noted that if the verification of the second core network device based on the first signature fails, the first core network device can terminate the processing and/or return a verification failure response message to the second core network device.

Optionally, the information about the second resource of the first network requested to be used is checked as follows. Check whether an identifier of each second resource in the information about the second resource of the first network requested to be used is an identifier of a resource of its own network, and/or check whether the price of the second resource of the first network requested to be used is accurate, etc. Specific content that may be checked and checking methods are not limited or exhaustively listed here.

In one embodiment, the second credential includes the first key encrypted based on the public key of the second core network device. The manner by which the first core network device generates the first key between the first core network device and the second core network device is not limited herein.

In some examples, the second credential may also be referred to as an authorization credential (or a primary credential) for the second resource requested or applied for used by the second core network device.

Optionally, after generating the second credential, the first core network device carries the second credential in the second resource response, and uploads the second resource response to the blockchain.

Optionally, in addition to the second credential, the second resource response message may further carry at least one of the following: the identifier of the second core network device, authorization for the second core network device to use the second resource of the first network, zero-knowledge proof data, or a second signature. That is, after generating the second credential, the first core network device carries the second credential and at least one of the following parameters in the second resource response and uploads the second resource response to the blockchain: the identifier of the second core network device, authorization for the second core network device to use the second resource of the first network, zero-knowledge proof data, or the second signature.

Specific content included in the authorization for the second core network device to use the second resource of the first network can be the same as the content included in the information about the second resource of the first network requested to be used, and will not be repeated here.

The zero-knowledge proof data (ZK) can be simply represented as ZK.

The second signature can be obtained by calculating based on the private key of the first core network device the parameter included in the second credential.

For example, the second signature can be obtained by calculating, by using a signature algorithm and based on the private key of the first core network device, at least one of an encrypted first key, the identifier of the second core network device, authorization for the second core network device to use the second resource of the first network, or zero-knowledge proof data.

For example, the second signature can be calculated as follows. A hash calculation is performed based on at least one of the encrypted first key, the identifier of the second core network device, the authorization for the second core network device to use the second resource of the first network, or the zero-knowledge proof data to obtain a second hash value. The second hash value is encrypted based on the private key of the first core network device to obtain the second signature.

The encrypted first key in the second credential, and the ZK and/or second signature can provide public verification capabilities to ensure that after the second credential is uploaded to the blockchain, the blockchain (e.g., on-chain nodes of the blockchain) can confirm that the second resource authorized by the second credential is provided to the second core network device by the first core network device, and the blockchain (e.g., on-chain nodes of the blockchain) can also confirm that the encrypted first key was indeed encrypted using the public key of the second core network device.

After the blockchain side obtains the second resource response message uploaded by the first core network device, the method may further include the following. Another on-chain node on the blockchain verifies the second resource response, and triggers a smart contract if the verification is successful. The smart contract may serve to deduct relevant fees from the second core network device.

For example, another on-chain node on the blockchain verifies the second resource response by at least one of the following. By using the public key of the second core network device and the encrypted first key, verify that the encrypted first key was indeed encrypted using the public key of the second core network device; or based on the encrypted first key extracted from the second credential and the ZK and the second signature extracted from the second resource response, verify that the second resource authorized by the second credential is provided to the second core network device by the first core network device. For example, using the public key of the second core network device and the encrypted first key, verify that the encrypted first key is indeed encrypted using the public key of the second core network device by decrypting the encrypted first key using the public key of the second core network device, and if the decryption is correct, determining that the encrypted first key was indeed encrypted using the public key of the second core network device. For example, based on the encrypted first key extracted from the second credential and the ZK and the second signature extracted from the second resource response, verify that the second resource authorized by the second credential is provided to the second core network device by the first core network device as follows. Based on the encrypted first key extracted from the second credential, the ZK and other parameters extracted from the second resource response message, and the public key of the second core network device, verify the second signature. If the verification is successful, determine that the second resource authorized by the second credential is provided by the first core network device to the second core network device.

After the blockchain (such as the on-chain nodes of the blockchain) completes the above processing, a deduction notification is sent to the second core network device. Correspondingly, after receiving the deduction notification, the second core network device can download the second credential from the blockchain.

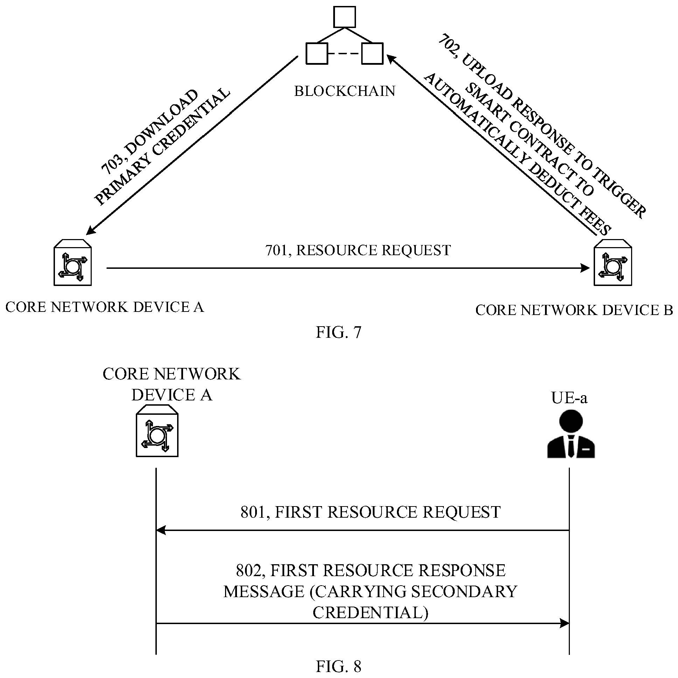

The issuance of the second credential above will be described below with reference to Embodiment 1. In Embodiment 1, for illustrative purpose, the second credential is a primary credential, the first core network device is represented as core network device B (or core network B), and the second core network device is represented as core network device A (or core network A). The process of Embodiment 1 is summarized as follows. After core network device A and core network device B negotiate rules for use of spectrum resources, core network device B uses PK*_{A}* (the public key of core network device A) to encrypt a symmetric key (i.e., the first key in the aforementioned embodiments) between core network device B and core network device A and upload the encrypted symmetric key to the blockchain. Core network device A downloads the primary credential from the blockchain. It can be noted that the on-chain nodes on the blockchain are composed of different operators, and the public keys of the on-chain nodes are public. With the help of the PKI certificate management system, each node (including core network device A and core network device B) trusts public key information of each other. A detailed explanation is provided with reference to FIG. 7.

At step 701, core network device A sends a resource request (i.e., a second resource request message) to core network device B off-chain to request specific spectrum resources. The resource request includes at least one of the following: ID*_{A}* indicating the identity of the requester, i.e., core network device A; relevant data of the spectrum resources requested by core network device A (i.e., information about the second resource of the first network requested to be used, which can be simply illustrated as RS-Att (resource attribute)), or the first signature Sig[H(ID*_{A}*, RS-Att)] of the above message.

For example, step 701 can be represented as: core network device A → core network device B: ID*_{A}*, RS - Att, Sig[H(ID*_{A}*,RS-Att)].

The first signature is to ensure the integrity of the message and to enable core network device B to ensure that the message is from core network device A.

The specific content or format of the relevant data of the spectrum resources requested by core network device A is shown in Table 1 below:

**Table 1**

| Content or format of the relevant data of the spectrum resources requested by core network device A: | | | |
|---|---|---|---|
| ID*_{B}* | Resource number (Nom1) | Usage period | Price |

Specifically, ID*_{B}* refers to the ID of core network device B which is used to represent the owner of the spectrum resources; the resource number refers to the number of the second resource requested by core network device A, which can be simply represented as Nom1. The relevant descriptions of ID*_{B}*, resource number, usage period and price are the same as those in the previous embodiments, and will not be repeated.

At step 702, after verifying reliability of the message sent by core network device A (by verifying the signature and checking the relevant data of spectrum resources), core network device B responds to the request of core network device A (i.e., the second resource response message), and uploads the response to the blockchain.

The response uploaded to the blockchain by core network device B can be used as transaction content, so that other on-chain nodes can verify that the response was indeed sent by core network device B to core network device A. On the blockchain, the response can trigger a smart contract to automatically deduct fees from core network device A.

The response includes the primary credential and the signature of the message Sig[*H*(Response)]. For example, step 702 can be represented as: core network device B → blockchain (smart contract): Response,Sig[*H*(Response)].

For example, content contained in the response is shown in Table 2:

**Table 2**

| Content contained in the response | | | | |
|---|---|---|---|---|
| ID*_{A}* | RS-Att | Enc_{PK_{A}}[*K*_{A-B}] | ZK | Sig*_{B}* |

Specifically, with reference to Table 2, the response includes: the identity ID*_{A}* of the requester, core network device A; the authorization credential RS-Att issued for specific spectrum resources (i.e., the authorization for the second core network device to use the second resource of the first network in the previous embodiments), the primary credential Enc_{PK_{A}}[*K*_{A-B}] which includes the key material *K_{A-B}* (i.e., the first key) for two-way authentication between operator A (i.e., core network device A) and operator B (core network device B) encrypted by core network device B using the public key PK*_{A}* of core network device A; zero-knowledge proof data ZK; and the second signature of core network device B Sig[*H*(Response)].

The primary credential, ZK, second signature of core network device B Sig[*H*(Response)] can provide public verification capabilities encrypted, ensuring that the blockchain can confirm that the spectrum data is provided by core network device B to core network device A, and that the key material was indeed encrypted with the public key of core network device A.

The smart contract mentioned in this step is a program that automatically executes contracts based on blockchain technology, which digitally records contract rules and terms, has high timeliness and decentralized characteristics, can ensure that contract participants receive fees in time and accurately, and adapts to the high-speed needs of the 6G era. In addition, the smart contract can set a refund condition, and once the condition is met, the contract will automatically execute the refund.

At step 703, after receiving the deduction notification (which can be sent to core network device A by the blockchain smart contract), core network device A downloads the primary credential from the blockchain.

For example, step 703 can be represented as: core network device A ← blockchain (smart contract): download primary credential.

In some possible embodiments, the terminal can request the issuance of the first credential from the second core network device of its own network.

Since the first credential is generated by further processing based on the second credential after the second credential is obtained through the interaction process at the core network level of the two networks, in some possible examples, the first credential can also be referred to as the secondary credential.

Before the terminal sends the authentication request, the method may further include the following. A first resource request message is sent to the second core network device, where the first resource request message is used to request use of a first resource of the first network. Further, the method may further include the following. A first resource response message is received from the second core network device, where the first resource response message carries the first credential.

The processing by the second core network device may include the following. A first resource request message is received from the terminal, where the first resource request message is used to request the use of the first resource of the first network. Further, the method may further include the following. The first resource response message is sent to the terminal.

Specifically, the first resource request message may carry at least one of the following: the identifier of the terminal, the identifier (or number) of the first resource of the first network requested to be used by the terminal, a third random number, or a second verification code.

The identifier of the terminal may refer to one of the following: the subscription permanent identifier (SUPI) of the terminal, the subscription concealed identifier (SUCI) of the terminal, the permanent equipment identifier (PEI) of the terminal, the 5G globally unique temporary identifier of the terminal, the internal-group identifier (IGI), and the generic public subscription identifier (GPSI) of the terminal, etc.

The first resource may be included in the second resource of the first network requested to be used by the second core network device. In other words, the first resource may be part or all of the second resource. For example, the second core network device may request multiple second resources of the first network, namely resource 0, resource 1, and resource 2 of the first network; the terminal may also request one or more first resources, such as resource 0 and resource 1 of the first network. It can be understood that this is merely exemplary and shall not be construed as limiting or exhaustive.

The third random number may be generated by the terminal, and the manner of generating the third random number is not limited in this embodiment.

The second verification code may be obtained by calculating based on a fourth key between the terminal and the second core network device using at least one of the following parameters: the identifier of the terminal, the number of the first resource, or the third random number.

The key type of the fourth key can be related to the type of the second core network device. For example, if the second core network device is an access and mobility management function (AMF), the fourth key can be Kamf; and if the second core network device is an authentication server function (AUSF), the fourth key can be Kseaf, etc. The possible types of the fourth key are not limited or exhaustively listed herein.

For example, the second verification code may be obtained by hashing the identifier of the terminal, the identifier of the first resource, and the first random number based on the key between the terminal and the second core network device. For example, the calculation of the second verification code can be represented as: *HMAC_{K_{A-a}}*[*IDₐ, Nom2, N*₁], where HMAC represents a hash function, *K_{A-a}* represents the fourth key, *IDₐ* represents the identifier the terminal,Nom2 represents the identifier of the first resource, and *N*₁ represents the third random number.

For example, the second verification code can be calculated using an integrity protection algorithm based on the key between the terminal and the second core network device, the identifier of the terminal, the identifier of the first resource, and the first random number. For example, the calculation of the second verification code can be represented as: *MAC*[*K_{A-a}, IDₐ, Nom*2, *N*₁], where MAC represents the integrity protection algorithm, *K_{A-a}* Represents the fourth key, *IDₐ* represents the identifier of the terminal,Nom2 represents the identifier of the first resource, and *N*₁ represents the third random number.

When the second verification code is carried in the first resource request message, after receiving the first resource request message from the terminal, the second core network device can also verify the identity of the terminal and integrity of the first resource request message based on the second verification code.

Specifically, the second core network device verifies the identity of the terminal and the integrity of the first resource request message based on the second verification code as follows. Obtain the second check code by calculating at least one of the identifier of the terminal, the identifier of the first resource, or the third random number based on the fourth key; and verify the identity of the terminal and the integrity of the first resource request message based on the second check code and the second verification code. The calculation method and calculation parameters of the second check code should be the same as those of the second verification code in the aforementioned embodiments, and therefore will not be repeated.

The identity of the terminal and the integrity of the first resource request message are verified based on the second check code and the second verification code by at least one of the following. If the second check code and the second verification code are consistent, the verification of the identity of the terminal and the verification of the integrity of the first resource request message are determined successful; or if the second check code and the second verification code are inconsistent, the verification of the identity of the terminal and the verification of the integrity of the first resource request message are determined to fail.

Additionally, the method may further include the following. If the verification of the identity of the terminal and the verification of the integrity of the first resource request message are determined to fail, the second core network device may also terminate the processing and/or send a verification failure response message to the terminal.

The second core network device may determine the fourth key by determining the fourth key between the second core network device and the terminal based on the identifier of the terminal carried in the first resource request message.

On the second core network device side, the first credential is calculated based on the first key and at least one of the following parameters: the second key between the terminal and the first core network device, or the temporary identifier of the terminal.

The first credential may be calculated by encrypting at least one of the second key between the terminal and the first core network device or the temporary identifier of the terminal based on the first key to obtain the first credential.

Preferably, the first credential can be obtained by encrypting the second key and the temporary identifier of the terminal using the first key, which can, for example, be represented as: *Ticketₐ = Enc_{K_{A-B}}*[*K_{a-B}, IDᵥₐ*], where *Ticketₐ* represents the first credential, Enc[] represents encryption calculation, *K_{A-B}* represents the first key, *K_{a-B}* represents the second key, and *IDᵥₐ* represents the temporary identifier of the terminal.

The second key between the terminal and the first core network device can be generated by the second core network device, and the manner by which the second core network device generates the second key is not limited herein. For example, the second key can be obtained by calculating based on the identifier of the first core network device, the identifier of the terminal, etc. The method for calculating the second key or the specific parameter used in calculating the second key is not limited or exhaustively listed herein.

The temporary identifier of the terminal is generated by the second core network device. The second core network device stores a correspondence between identifiers of the terminal and temporary identifiers of the terminal. The specific content or value of the temporary identifier of the terminal is not limited in this embodiment; as long as the temporary identifier differs from the identifier of the terminal, it falls in the protection scope of this embodiment. The temporary identifier of the terminal serves to conceal the real identity of the terminal from the first core network device.

In one example, the second core network device can add the first credential to the first resource response message and send the first resource response message to the terminal.

In one example, in addition to the first credential, the first resource response message further carries at least one of the following: the second key between the terminal and the first core network device or the temporary identifier of the terminal.

Further, the first resource response message may further carry at least one of the following: the identifier of the terminal, the identifier of the first core network device, the identifier of the first resource, or a fourth random number.

The fourth random number indicates that the first resource response message is not a replay. The fourth random number is related to the third random number. For example, the fourth random number can be equal to the third random number. For example, the fourth random number can be equal to the third random number plus a first specified value, where the first specified value can be configured according to actual conditions. In some examples, the first specified value can be equal to 1, that is, the fourth random number equals the third random number plus 1. In some other examples, the first specified value can also be greater than 1. All possible values of the first specified value are not limited or exhaustively enumerated herein.

By carrying the identifier of the first resource in the first resource response message, it indicates that the terminal is allowed, agreed to, or supported to use the first resource of the first network.

Optionally, when generating the first resource response message, the second core network device can directly add the first credential and at least one of the following parameters to the first resource response message: the second key, the temporary identifier of the terminal, the identifier of the terminal, the identifier of the first core network device, the identifier of the first resource, or the fourth random number.

For example, the content carried by the first resource response message can be represented as :*IDₐ, K_{a-B}, IDᵥₐ, ID_{B}, N*₁ *+* 1, *Nom2, Ticketₐ,* where *IDₐ* represents the identifier of the terminal. *N*₁ + 1 represents the fourth random number which is equal to the third random number *N*₁ plus 1, and the rest are the same as those in the previous example and will not be repeated.

In this case, the terminal can directly receive and obtain the first credential carried in the first resource response message, and can also obtain at least one of the following carried in the first resource response message: the second key, the temporary identifier of the terminal, the identifier of the terminal, the identifier of the first core network device, the identifier of the first resource, or the fourth random number.

Optionally, when generating the first resource response message, the second core network device can obtain first ciphertext information by calculating, based on the fourth key, the first credential and at least one of the following parameters: the second key, the temporary identifier of the terminal, the identifier of the first core network device, the identifier of the first resource, or the fourth random number; and add the identifier of the terminal and the first ciphertext information to the first resource response message.

For example, the content carried by the first resource response message can be represented as: *IDₐ, Enc_{K_{A-a}}*[*K_{a-B}*, *IDᵥₐ,* ID*_{B}*, *N*₁ *+* 1, *Nom2, Ticketₐ*], where *EnC_{K_{A-a}}*[] indicates encryption calculation using the fourth key, and the rest are the same as those in the previous example, and will not be repeated.

In this case, after receiving the first resource response message, the terminal can directly obtain the identifier of the terminal, and decrypt the first ciphertext information in the first resource response message based on the fourth key to obtain the first credential and at least one of the following parameters: the second key, the temporary identifier of the terminal, the identifier of the first core network device, the identifier of the first resource, or the fourth random number.

For example, if the first ciphertext information is obtained by encrypting the first credential, the second key, the temporary identifier of the terminal, the identifier of the first core network device, the identifier of the first resource, and the fourth random number, and the first resource response message also carries the identifier of the terminal, then the terminal may further perform the following after receiving the first resource response message. The terminal determines, based on the identifier of the terminal, that the first resource response message is sent to itself; and decrypts, based on the fourth key, the first ciphertext information to obtain the first credential, the second key, the temporary identifier of the terminal, the identifier of the first core network device, the identifier of the first resource, and the fourth random number.

By using the first encrypted information to transmit parameters in the first resource response message, the confidentiality of the message can be guaranteed, and the terminal can verify that the message indeed comes from the second core network device by decrypting the first encrypted information, while also believing that the message is not tampered with.

Optionally, when generating the first resource response message, the second core network device can obtain a fourth verification code by calculating, based on the fourth key, the first credential and at least one of the following parameters: the second key, the temporary identifier of the terminal, the identifier of the first core network device, the identifier of the first resource, or the fourth random number; and add the identifier of the terminal and the third verification code to the first resource response message.

In this case, after receiving the first resource response message, the terminal can obtain a fourth check code by calculating, based on the fourth key, the first credential and at least one of the following parameters: the second key, the temporary identifier of the terminal, the identifier of the first core network device, the identifier of the first resource, or the fourth random number. If the fourth check code and the fourth verification code are consistent, the first resource response message is determined to be trustworthy (i.e., not tampered with).

The terminal receives the first resource response message and obtains the first credential, where the first credential can be used by the terminal to access the network where the first core network device is located.

Optionally, the terminal can also obtain the temporary identifier of the terminal through the first resource response message, so as to conceal the real identity of the terminal when accessing the network where the first core network device is located.

Optionally, the terminal can also obtain the second key through the first resource response message, so as to use the second key when accessing the network where the first core network device is located.

Optionally, the terminal can also obtain the fourth random number through the first resource response message, so as to determine that the first resource response message is not a replay by comparing the fourth random number with the third random number.

The issuance of the first credential will be described below with reference to Embodiment 2. In Embodiment 2, for illustrative purpose, the first credential is the secondary credential, the terminal is simply represented as UE-a, the first core network device is represented as core network device B (or core network B), and the second core network device is represented as core network device A (or core network A). The process of Embodiment 2 is summarized as follows. Core network device A issues the secondary credential to UE-a (user a). The secondary credential is encrypted with K_{A-B}. Since only core network device A and core network device B know K_{A-B}, when UE-a uses the secondary credential to access the network where core network device B is located, core network device B can trust the validity of the secondary credential. After decrypting the secondary credential, core network device B obtains session symmetric key K_{a-B} between the core network device B and UE-a.

Definitions of characters involved in Embodiment 2 are shown in Table 3:

**Table 3**

| Character meaning: | |
|---|---|
| *K_{A-B}* | key material between core network device A and core network device B (i.e., the first key). *K_{A-B}* is generated by core network B and sent to core network A. |
| *K_{A-a}* | key material between core network device A and UE-a (i.e., the fourth key); *K*_{*A*-a} can be compatible with the existing 3GPP key architecture, which is an advantage of the present disclosure. |
| *IDᵥₐ* | a temporary identifier of UE-a |
| *N*₁ | a third random number, to prevent replay attacks |

The issuance of the secondary credential involved in Embodiment 2 is illustrated by way of example with reference to FIG. 8:
At step 801, UE-a under the jurisdiction of operator A sends a first resource request message to core network device A to indicate.

The first resource request message may include: spectrum resources required by UE-a Nom2 (i.e., the identifier of the first resource), *N*₁ indicating the freshness of the session, the identity ID*ₐ* of the requester UE-a enabling core network device A to know to authenticate UE-a with the corresponding key material, and a first message authentication code HMAC (i.e., the second verification code in the aforementioned embodiment) obtained by hashing the above message with the key material *K*_{A-a} (the key between core network device A and UE-a). HMAC may enable core network device A to verify the identity of the message sender and the integrity of the message (by hashing the received message once with the key material only between the two parties and then comparing the result with received HMAC1).

For example, step 801 can be represented as: UE-a → core network device A: *IDₐ, Nom, N*₁, *HMAC_{K_{A-a}}*[*IDₐ, Nom*2, *N*₁].

At step 802, after verifying the reliability of the received first resource request message, core network device A sends a first resource response message to UE-a.

The first resource response message may carry: ID*ₐ* indicating that core network device A has received the request of UE-a, *K*_{a-B} which represents key material (i.e., the second key) distributed by core network device A (a network where core network device A is located ) to UE-a and core network device B, IDᵥₐ which represents the temporary identity (or temporary identifier) of UE-as (serving to conceal the real identity of the terminal from a network where core network device B is located), *N*₁+1 indicating that the message is not a replay, Name2 representing spectrum resources corresponding to the secondary credential, and *Ticketₐ* representing a secondary credential for UE-a to successfully access the network where core network device B is located. The above parameters (*K_{a-B}, IDᵥₐ, ID_{B}*, *N*₁ *+* 1, *Nom, Ticketₐ*) are sent through a secure channel between core network device A and UE-a, i.e., encrypted using the key material between core network device A and UE-a. This ensures the confidentiality of the message and allows UE-a to verify that the message is indeed from core network device A, while also believing that the message has not been tampered with.

Optionally, core network device A can also obtain a message verification code by calculating (*K_{a-B}, IDᵥₐ, ID_{B}, N*₁ + 1, *Nom, Ticketₐ*)) and send the message verification code to UE-a. Correspondingly, UE-a will also verify the message verification code to verify whether the first resource response message has been tampered with.

It can be noted that core network device A stores a correspondence between identifiers of the terminal *IDₐ* and temporary identifiers of the terminal IDᵥₐ.

The secondary credential *Ticketₐ = Enc_{K_{A-B}}*[*K_{a-B}*, *IDᵥₐ*]. Specifically, the secondary credential Ticket*ₐ* is a string of ciphertext stored on the core network device A side, which can only be decrypted by core network device A and core network device B. Therefore, core network device B can verify that a UE with *Ticketₐ* is a UE under operator A (i.e., the network where core network device A is located).

For example, step 802 can be represented as: core network device A → UE-a: *IDₐ, Enc_{K_{A-a}}*[*K_{a-B}*, *IDᵥₐ, ID_{B}*, *N*₁ + 1, *Nom*2, *Ticketₐ*].

In some possible embodiments, when the terminal accesses a roaming network (i.e., the first network), the first network device of the roaming network needs to perform relevant authentication processing.

The terminal may send an authentication request to the first network device after receiving the first resource response message carrying the first credential.

In addition to the first credential, the authentication request also carries a first verification code for verifying the identity of the terminal, the first verification code being calculated based on the second key between the terminal and the first core network device and the first credential.

Optionally, the first verification code can be obtained by integrity protection calculation based on the second key and the first credential. For example, the process of calculating the first verification code can be represented as *MAC*[*K_{a-B}, Ticketₐ*].

Optionally, the first verification code can be obtained by hash calculation of the first credential based on the second key. For example, the process of calculating the first verification code can be represented as:*HMAC_{K_{a-B}}*[*Ticketₐ*].

Further, the authentication request also carries at least one of the following: the identifier of the first resource of the first core network device requested to be used, the temporary identifier of the terminal, the identifier of the first network device, or the first random number. The first random number is generated by the terminal.

As described in the foregoing embodiments, the first network device can be the access network device or the first core network device. Therefore, the identifier of the first network device carried in the above authentication request may be different depending on the actual situation. When the terminal sends an authentication request to the access network device, the identifier of the first network device is the identifier of the access network device; and when the terminal sends an authentication request to the access network device, the identifier of the first network device is the identifier of the first core network device.

Accordingly, the first verification code is calculated based on the second key, the first credential, and at least one of the following parameters: the identifier of the first resource of the first network requested to be used, the temporary identifier of the terminal, the identifier of the access network device, or the first random number.

The parameters used to calculate the first verification code may be at least partially the same as the content or parameters carried in the authentication request. For example, the authentication request carries the first credential, the identifier of the first resource, the temporary identifier of the terminal, the identifier of the first network device, and the first random number, but the first verification code can be calculated using the first credential, the temporary identifier of the terminal, and the first random number. For another example, the authentication request carries the first credential, the identifier of the first resource, the temporary identifier of the terminal, the identifier of the first network device, and the first random number, and the first verification code is also calculated using the first credential, the identifier of the first resource, the temporary identifier of the terminal, the identifier of the access network device, and the first random number.

For example, the first verification code is calculated based on the second key, the first credential, the identifier of the first resource, the temporary identifier of the terminal, the identifier of the first network device, and the first random number. For example, the process of calculating the first verification code can be expressed as:
*MAC*[*K_{a-B}, IDᵥₐ, ID_{b}, N*2, *Nom2, Ticketₐ*], where N2 represents the first random number, *ID_{b}*It can be the identifier of the access network device (when the authentication request is sent to the access network device) or the identifier of the first core network device (when the authentication request is sent to the first core network device), and the meanings of the rest in the formula is the same as those in the previous embodiment, and will not be repeated.

For example, the first verification code can be hashed based on the second key on the first credential, the identifier of the first resource, the temporary identifier of the terminal, the identifier of the first network device, and the first random number. For example, the process of calculating the first verification code can be expressed as:
*HMAC_{K_{a-B}}*[*IDᵥₐ, ID_{b}, N, Nom2, Ticketₐ*], where the meaning of the content in the formula is the same as that in the previous embodiment, and will not be repeated.

In some possible embodiments, the first network device is the access network device of the first network. That is, the authentication request is sent to the access network device. It can be noted that in this embodiment, the identifier of the first network device involved in the previous embodiment can specifically be the identifier of the access network device, which will not be repeated below.

After receiving the authentication request, the access network device cannot determine whether the parameters or content contained in the authentication request are correct. Therefore, the content or parameters in the authentication request need to be sent to the first core network device for verification. The access network device may further perform the following after receiving the authentication request. An authorization request is sent to the first core network device, where the authorization request carries the first credential. The first core network device may further perform the following after receiving the authorization request. The first credential is decrypted based on the first key to obtain a decryption result; and the terminal is authenticated based on the decryption result.

Specifically, the terminal is authenticated based on the decryption result as the follows. The authentication of the terminal is determined to be successful if the decryption result is correct; and the authentication of the terminal is determined to fail if the decryption result is incorrect.

Whether the decryption result is correct may be determined by at least one of the following. Determine that the decryption result is correct if the decryption result does not contain any garbled characters and the format of the decryption result is correct; or determine that the decryption result is incorrect if the decryption result contains garbled characters and/or the format of the decryption result is incorrect. Additionally, in the case of an incorrect decryption result, the first core network device may terminate the processing and/or return a response message to the access network device indicating that the authentication of the terminal has failed.

Further, if the decryption result is correct, the first core network device can save the content or parameters contained in the decryption result. Specifically, the decryption result includes at least one of the following: the second key between the terminal and the first core network device, or the temporary identifier of the terminal.

Optionally, after the first core network device obtains the decryption result, the method further includes the following. An authorization response is sent to the access network device, where the authorization response carries a first check code, and the first check code is calculated based on the second key between the terminal and the first core network device and the first credential.

The calculation method of the first check code should be the same as the calculation method of the first verification code in the aforementioned embodiment, which will not be repeated herein.

Optionally, in addition to carrying the first credential, the authorization request also carries at least one of the following: the identifier of the first resource of the first core network device requested to be used, the temporary identifier of the terminal, the identifier of the access network device, or the first random number.

In this case, the first check code is calculated based on the second key, the first credential, and at least one of the following parameters: the identifier of the first resource, the temporary identifier of the terminal, the identifier of the access network device, and the first random number. The calculation method and calculation parameters of the first check code should also be the same as those used in the first verification code in the aforementioned embodiments, and therefore will not be repeated.

Optionally, the authorization request sent by the access network device may also carry a third verification code, and the third verification code is calculated based on a fifth key between the access network device and the first core network device and at least one of the following parameters: the first credential, the identifier of the first resource, the temporary identifier of the terminal, the identifier of the access network device, or the first random number.

The fifth key between the access network device and the first core network device can be a shared key between the access network device and the first core network device, and possible types of the fifth key are not limited in this embodiment.

The parameters carried in the authorization request can be the same as those carried in the authentication request sent by the terminal to the access network device. For example, if the authentication request carries the first credential, the identifier of the first resource, the temporary identifier of the terminal, the identifier of the access network device, and the first random number, the authorization request can also carry the first credential, the identifier of the first resource, the temporary identifier of the terminal, the identifier of the access network device, and the first random number.

The parameters used to calculate the third verification code can be at least partially the same as those carried in the authorization request. For example, if the subscription request carries the first credential, the identifier of the first resource, the temporary identifier of the terminal, the identifier of the access network device, and the first random number, the calculation of the third verification code can use only the first credential, the temporary identifier of the terminal, the identifier of the access network device, and the first random number. For another example, if the subscription request carries the first credential, the identifier of the first resource, the temporary identifier of the terminal, the identifier of the access network device, and the first random number, the calculation of the third verification code can use the same parameters.

For example, the third verification code is calculated based on the fifth key, the first credential, the identifier of the first resource, the temporary identifier of the terminal, the identifier of the access network device, and the first random number. For example, the process of calculating the third verification code can be represented as:
*MAC*[*K_{b-B}, IDᵥₐ, ID_{b}, N2, Nom2, Ticketₐ*], where *K_{b-B}* represents the fifth key between the access network device and the first core network device, N2 represents the first random number, the meaning of the rest of the contents in the formula is the same as those in the aforementioned embodiment, and will not be repeated.

For example, the third verification code can be hashed based on the fifth key using the first credential, the identifier of the first resource, the temporary identifier of the terminal, the identifier of the access network device, and the first random number. For example, the process of calculating the third verification code can be represented as:
*HMAC_{K_{b-B}}*[*IDᵥₐ, ID_{b}, N2, Nom2, Ticketₐ*], where the meaning of the content in the formula is the same as that in the previous embodiment, and will not be repeated.

Correspondingly, the first core network device can also verify message integrity of the authorization request based on the third verification code.

The first core network device can verify the message integrity of the authorization request based on the third verification code as follows. A third check code is calculated based on the fifth key and at least one of the following parameters: the first credential, the identifier of the first resource, the temporary identifier of the terminal, the identifier of the access network device, or the first random number. The message integrity of the authorization request is verified based on the third check code and the third verification code.

The calculation method and parameters used by the first core network device to calculate the third check code should be the same as those used by the access network device to calculate the third verification code, and will not be repeated here.

Based on the third check code and the third verification code, the message integrity of the authorization request can be verified by at least one of the following. If the third check code and the third verification code are consistent, the verification of the message integrity of the authorization request is determined to be successful; or if the third check code and the third verification code are consistent, the verification of the message integrity of the authorization request is determined to fail.

In addition, the method may further include the following. If the verification of the message integrity of the authorization request fails, the first core network device may terminate the processing and/or send a response message to the access network device indicating failure of the verification of the message integrity.

This embodiment does not limit the order in which the first core network device verifies the message integrity of the authorization request based on the third verification code and authenticates the terminal based on the decryption result. For example, the first core network device can first authenticate the terminal based on the decryption result. If the terminal authentication is successful, the first core network device can then verify the message integrity of the authorization request based on the third verification code. If verification of the message integrity of the authorization request is successful, the subsequent processing of generating the first check code is performed. Alternatively, the first core network device can first verify the message integrity of the authorization request based on the third verification code. If verification of the message integrity of the authorization request is successful, the first core network device can then authenticate the terminal based on the decryption result. If verification of the terminal authentication is successful, the subsequent processing of generating the first check code is performed.

In one embodiment, the authorization response carries the first check code. After the access network device sends the authorization request, the method further includes the following. The access network device receives the authorization response from the first core network device, where the authorization response carries the first check code; and the access network device receives verifies the identity of the terminal based on the first check code and the first verification code.

The identity of the terminal is verified based on the check code and the first verification code as follows. If the first check code and the first verification code are consistent, the verification of the identity of the terminal is determined to be successful; and if the first check code and the first verification code are not consistent, the verification of the identity of the terminal is determined to fail.

Further, the method may also include the following. If the verification of the identity of the terminal fails, the access network device may terminate the processing and/or send a response message to the terminal indicating failure of the verification of the identity of the terminal (for example, the access network device may send an authentication response to the terminal, the authentication response carrying the authentication result of authentication failure).

Optionally, the authorization response may also carry a third key for communication between the terminal and the access network device. The generation method of the third key is not limited in this embodiment.

Specifically, the authorization response may carry second ciphertext information, the second ciphertext information being obtained by calculating, based on the fifth key, the third key and third ciphertext information, the third ciphertext information being obtained by calculating, based on the second key between the terminal and the first core network device, the third key.

The third ciphertext information is obtained by calculating, based on the second key between the terminal and the first core network device, the third key and the second random number. The second random number can be related to the first random number. For example, the second random number can be the same as the first random number, or the second random number can be equal to the first random number plus a second specified value. The second specified value can be configured according to the actual situation, such as 1 or other values. The second specified value is not limited or exhaustively listed herein.

In one embodiment, when the access network device receives the authorization response and the authorization response carries the third key, the access network device may further send an authentication response to the terminal, where the authentication response carries the third key. Correspondingly, the terminal may receive the authentication response from the access network device, where the authentication response carries the third key for communication between the terminal and the access network device.

The authentication response can also indicate an authentication result of the terminal, which can be authentication success or authentication pass.

The authentication response can be generated by the access network device decrypting the second ciphertext carried in the authorization response based on the fifth key to obtain the third key and the third ciphertext information, and adding the third ciphertext information to the authentication response. In this way, the access network device locally stores the third key, thereby ensuring that the access network device can obtain the same third key as the terminal.

Correspondingly, after receiving the authentication response, the terminal may extract the third ciphertext information from the authentication response, decrypt the third ciphertext information based on the second key between the terminal and the first core network device, and obtain the third key.

Further, if the third ciphertext information also includes the second random number, the terminal can also decrypt the third ciphertext information to obtain the second random number, and the terminal can verify that the authentication response is not a replay message based on the second random number.

After the terminal completes the above processing, the terminal can use the third key to conduct subsequent communication with the access network device.

The above processing using the first credential will be explained below with reference to Embodiment 3. In Embodiment 3, for illustrative purpose, the first credential is a secondary credential, the terminal is represented as UE-a, the first core network device is represented as core network device B, the access network device is represented as base station b, and the second core network device is represented as core network device A.

Definitions of characters involved in Embodiment 3 are shown in Table 4:

**Table 4**

| | |
|---|---|
| *K_{a-B}* | a symmetric key (i.e., the second key) between UE-a and core network device B, generated by core network device A and used to protect Ka-b, representing a session symmetric key Ka-B between core network device B and |
| | user a. |
| *K_{b-B}* | a symmetric key (i.e. the fifth key) between base station b and core network device B, compatible with the existing 3GPP key architecture, which is an advantage of the present disclosure. |
| *K_{A-B}* | a symmetric key (i.e., the first key) between core network device A and core network device B, generated by core network device B and sent to core network device A. Core network device A uses K_{A-B} to encrypt and generate the secondary credential. Core network device B uses *K_{A-B}* to verify the secondary credential. |
| *K_{a-b}* | a symmetric key (i.e., the third key) between UE-a and base station b, which is a session key generated by core network device B and sent to base station b, and sent to UE-a by base station b. |
| *IDᵥₐ* | a temporary identity (temporary identifier) of UE |
| *N2* | a first random number, to prevent replay attacks |

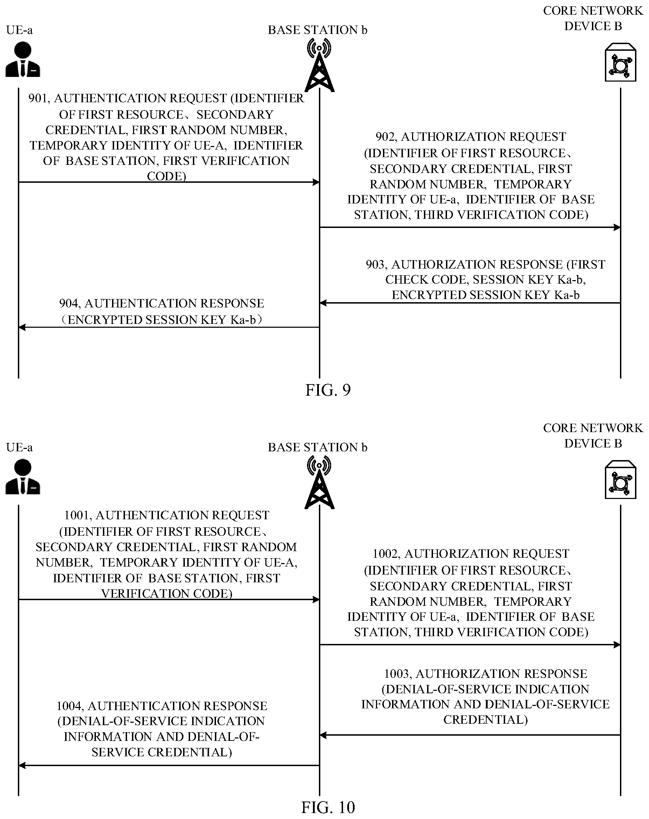

The processing using the secondary credential provided in Embodiment 3 is illustrated with reference to FIG. 9.

At step 901, UE-a sends an authentication request to base station b under core network device B to request use of spectrum resources (i.e., the first resource in the aforementioned embodiment).

For example, step 901 can be represented as: UE-a → base station b:*IDᵥₐ, ID_{b}, N, Nom*2, *Ticketₐ, HMAC_{K_{a-B}}*[*IDᵥₐ, ID_{b}, N*2, *Nom*2*, Ticketₐ*].

Specifically, the authentication request can carry:*Nom2* indicating the identifier (or number) of the first resource of the network where core network device B is located requested to be used by UE-a, *Ticketₐ* which represents the secondary credential, first random number *N*2 indicating the freshness of the message, *IDᵥₐ* which represents the temporary identity of the requester, i.e., UE-a, and *ID_{b}* indicating the identifier of the base station to be accessed. The above message is hashed using the key material between UE-a and core network device B to obtain a message authentication code HMAC (i.e., the first verification code in the aforementioned embodiment), and HMAC allows core network device B to authenticate the source of the authentication message of is *IDᵥₐ* and that the message has not been tampered with.

At step 902, after receiving the authentication request sent by UE-a, since base station b cannot authenticate reliability of the request, base station b initiates an authorization request to core network device B.

Specifically, base station b hashes parameters contained in the received authentication request using the key material *K_{b-B}* between base station b and core network device B to obtain a message authentication code HMAC (i.e., the third verification code in the aforementioned embodiment). Then, base station b adds the parameters contained in the authentication request and HMAC to the authorization request and send the authorization request to core network device B. HMAC allows core network device B to verify that the authorization request indeed comes from base station b and that the message has not been tampered with (core network device B uses the key material between core network device B and base station b to hash the received message and compare the result with the received HMAC).

For example, step 902 can be represented as: base station b → core network device B: *IDᵥₐ, ID_{b}, N*2, *Nom*2, *Ticketₐ, HMAC_{K_{b-B}}*[*IDᵥₐ, ID_{b}, N*2, *Nom*2, *Ticketₐ*].

At step 903, after verifying the reliability of the authorization request sent by base station b, core network device B sends an authorization response to base station b.

To ensure the confidentiality of the authorization response, the authorization response is sent through a secure channel between core network device B and base station b, i.e., using key material *K_{b-B}* to encrypt and send parameters in the authorization response. The parameters in the authorization response include: a session key *K_{a-b}* for communication distributed between UE-a and base station b, an encrypted session key *Enc_{K_{a-B}}*[*K_{a-b}, N2 +* 1], and the first check code *HMAC_{K_{a-B}}*[*IDᵥₐ, ID_{b}, N*2, *Nom*2, *Ticketₐ*].

For example, step 903 can be represented as: core network device B → base station b: *Ene_{K_{b-B}}*[*K_{a-b}, Enc_{K_{a-B}}*[*K_{a-b},N*2 *+* 1], *HMAC_{K_{a-B}}*[*IDᵥₐ, ID_{b}, N2, Nom2, Ticketₐ*]].

At step 904, after base station b verifies the reliability of the received authorization response (verifies that the source is core network device B and the message has not been tampered with), base station b compares HMAC received from UE-a with HMAC received from core network device B. If HMAC received from UE-a and HMAC received from core network device B are the same, it indicates that UE-a is a legitimate UE-a (or the identity of UE-a is legitimate). Base station b sends an authentication response to UE-a, and forwards *Enc_{K_{a-B}}*[*K_{a-b}, N +* 1] to UE-a through the authentication response. UE-a uses the key material between UE-a and the core network to decrypt to obtain a session key between UE-a and base station b. At the same time, the decrypted *N*2 + 1also indicates that the message is not a replay. At this point, UE-a can normally use the received session key to access base station b, that is, successfully use spectrum resources.

For example, step 904 can be represented as: base station b → UE- a:*Enc_{K_{a-B}}*[*K_{a-b}, N* + 1].

In some possible embodiments, the first network device is the first core network device of the first network. That is, the authentication request is sent to the first core network device. It can be noted that in this embodiment, the identifier of the first network device involved in the aforementioned embodiments can specifically be the identifier of the first core network device, which will not be repeated below.

After receiving the authentication request, the first core network device may further decrypt the first credential based on the first key to obtain a decryption result; and authenticate the terminal based on the decryption result.

Specifically, the terminal is authenticated based on the decryption result as follows. The authentication of the terminal is determined to be successful if the decryption result is correct; or the authentication of the terminal is determined to fail if the decryption result is incorrect. The determination of whether the decryption result is correct is the same as that in the aforementioned embodiments, and will not be repeated.

Further, if the decryption result is correct, the first core network device can save the content or parameters contained in the decryption result. Specifically, the decryption result includes at least one of the following: the second key between the terminal and the first core network device, or the temporary identifier of the terminal.

Optionally, the authentication request further carries the first verification code for verifying the identity of the terminal.

After the first core network device obtains the decryption result, the method further includes the following. The identity of the terminal is verified based on the first check code and the first verification code, where the first check code is calculated based on the second key between the terminal and the first core network device and the first credential.

Optionally, the authentication request further carries at least one of the following: the identifier of the first resource of the first core network device requested to be used, the temporary identifier of the terminal, the identifier of the first core network device, or the first random number.

In this case, the first check code is calculated based on the second key, the first credential, and at least one of the following parameters: the identifier of the first resource, the temporary identifier of the terminal, the identifier of the first core network device, or the first random number.

The calculation method of the first check code should be the same as the calculation method of the first verification code in the aforementioned embodiment, which will not be repeated.

It can be noted that the identity of the terminal can be verified based on the first check code and the first verification code as follows. If the first check code and the first verification code are consistent, the verification of the identity of the terminal is successful (or the verification passes). Alternatively, the following can be further included: if the first check code and the first verification code are inconsistent, the verification of the identity of the terminal fails, and the first core network device can terminate the processing and/or send a response message to the terminal indicating verification failure.

After the first core network device completes the above authentication and the authentication is successful, the method further includes at least one of the following. An authentication response is sent to the terminal, where the authentication response carries the third key for communication between the terminal and the access network device of the first network; or the third key is sent to the access network device. The authorization response also carries the third key for communication between the terminal and the access network device. The generation method of the third key is not limited in this embodiment.

Optionally, the authentication response may carry the third ciphertext information, and the third key information is obtained by calculating based on the second key between the terminal and the first core network device. In addition, the third key sent by the first core network device to the access network device may also be encrypted using the fifth key between the access network device and the first core network device and then sent, which is not limited in this embodiment.

Correspondingly, the terminal may receive the authentication response from the first core network device, where the authentication response carries the third key for communication between the terminal and the access network device of the first network. The access network may receive the third key from the first core network device.

Optionally, after receiving the authentication response, the terminal may further extract the third ciphertext information from the authentication response and decrypt the third ciphertext information based on the second key between the terminal and the first core network device, to obtain the third key.

Optionally, if the third ciphertext information also includes the second random number, the terminal may also decrypt the third ciphertext information to obtain the second random number, and verify that the authentication response is not a replay message using the second random number.

After the terminal completes the above processing, the terminal may use the third key to conduct subsequent communication with the access network device of the first network.

In some possible embodiments, if the terminal fails to access the first network, the terminal may also send access failure or registration failure information to the second core network device.

Optionally, after receiving the authorization request, the first core network device may further send an authorization response to the access network device upon determining based on a local policy to deny access of the terminal to the network, where the authorization response indicates denial-of-service to the terminal.

Optionally, after receiving the authentication request from the terminal, the first core network device may further send an authentication response to the terminal upon determining based on a local policy to deny access of the terminal to the network, where the authentication response indicates denial-of-service to the terminal.

The local policy on the first core network device side can be configured according to actual conditions, such as prioritizing service to the local network or local users, which may result in denial-of-service to the terminal.

The authorization response used to indicate denial-of-service to the terminal may carry denial-of-service indication information and a denial-of-service credential. The denial-of-service credential may be a third signature, which is obtained by calculating, based on the private key of the first core network device, the denial-of-service indication information and at least one of the following parameters: the first credential, the identifier of the first resource, the temporary identifier of the terminal, the identifier of the access network device, or the first random number. The calculation method of the third signature is similar to the that of the first signature or the second signature in the foregoing embodiments, and will not be repeated.

Optionally, the authorization response indicating denial-of-service to the terminal may also carry at least one of the following: the first credential, the identifier of the first resource, the temporary identifier of the terminal, the identifier of the access network device, or the first random number.

After receiving the authorization response indicating denial-of-service to the terminal, the access network device sends an authentication response indicating denial-of-service to the terminal. The authentication response indicating denial-of-service to the terminal carries the same content as the authorization response indicating denial-of-service to the terminal.

The processing of denial-of-service by the first core network device will be described below with reference to Embodiment 4. In Example 4, for illustrative purpose, the terminal is represented as UE-a, the first core network device is represented as core network device B, the access network device is represented as base station b, and the second core network device is represented as core network device A. Specifically, as illustrated in FIG. 10, the following is included.

Operations at steps 1001 and 1002 are the same as that at steps 901 and 902, and will not be described in detail.

At step 1003, core network device B strategically denies service (e.g., prioritizing local users). In this case, core network device B sends an authorization response to base station b, carrying denial-of-service indication information and a denial-of-service credential.

For example, step 1003 can be represented as: core network device B → base station b: *False,* M1, SigB[*False,* M1]. *False* represents a denial-of-service indication information, M1 includes the secondary credential, the identifier of the first resource, the temporary identifier of UE-a, the identifier of base station b, and the first random number N2, and SigB represents the denial-of-service credential (i.e., the third signature).

At step 1004. base station b sends an authentication response to UE-a, carrying the same content as the authorization response at step 1003.

In other words, core network device B, through base station b, returns the denial-of-service credential to UE-a (*IDᵥₐ*), that is, sign the secondary credential of the specific resource.

In some embodiments, after the terminal receives the authentication response indicating denial-of-service to the terminal from the access network device, the terminal may further send the denial-of-service credential to the second core network device.

Optionally, the terminal sending the denial-of-service credential to the second core network device may refer to the terminal sending all the content contained in the authentication response to the second core network device; or the terminal sending the denial-of-service credential and at least one of the following parameters to the second core network device: the first credential, the identifier of the first resource, the temporary identifier of the terminal, the identifier of the access network device, or the first random number.

After receiving the denial-of-service credential, the second core network device can also verify the denial-of-service credential. For example, the denial-of-service credential specifically includes the third signature, and the second core network device can perform the verification based on the public key of the first core network device, the third signature, and at least one of the following parameters: the first credential, the identifier of the first resource, the temporary identifier of the terminal, the identifier of the access network device, or the first random number. The specific processing for verifying the third signature is similar to that for verifying the first signature or the second signature, and will not be elaborated further.

The second core network device may further upload all received denial-of-service credentials to the blockchain when the second credential expires. Correspondingly, after receiving all the denial-of-service credentials from the second core network device, the nodes on the blockchain (other nodes) deduct corresponding fees from the first core network device if the verification of all the denial-of-service credentials are successful.

The duration of the second credential can be the same as the usage period of the second resource of the first network requested to be used by the second core network device.

All the received denial-of-service credentials are uploaded to the blockchain by uploading all the received denial-of-service credentials and parameters related to each denial-of-service credential to the blockchain. The parameters related to each denial-of-service credential may include the first credential, the identifier of the first resource related to each denial-of-service credential, the temporary identifier of the terminal related to each denial-of-service credential, the identifier of the access network device related to each denial-of-service credential, and the first random number related to each denial-of-service credential.

The verification of any denial-of-service credential by the node on the blockchain can mean if the third signature is successfully verified using the public key of the first core network device, and the identifier of the first resource is included in the identifier of the second resource paid for (or purchased) by the second core network device, then the denial-of-service credential is determined.

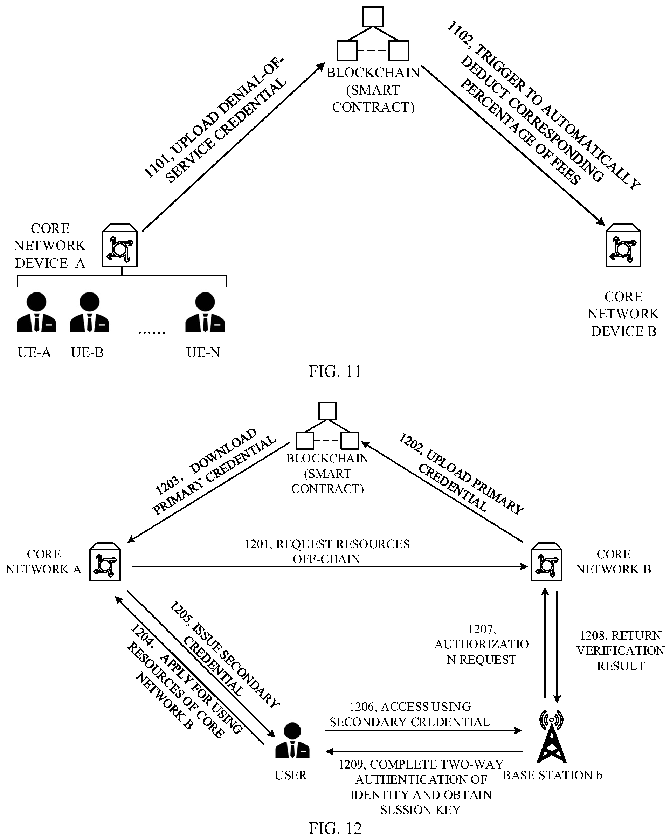

The following describes the processing of claims by the second core network device with reference to with Embodiment 5. In Embodiment 5, for illustrative purpose, the terminal is represented as UE-a, the first core network device is represented as core network device B, the access network device is represented as base station b, and the second core network device is represented as core network device A. Specifically, as illustrated in FIG. 11, the following is included.

At step 1101, after receiving a denial-of-service credential from core network device B, UE-a delivers the denial-of-service credential to core network device A where the terminal belongs to. When the primary credential expires, core network device A collects the denial-of-service credential signed by core network device B, verifies the denial-of-service credential by itself, and then uploads the denial-of-service credential to the blockchain for other nodes on the blockchain to verify (using the public key of core network device B to verify that the signature does indeed come from core network B and *Nom* is consistent with the resource number at the time of purchase).

FIG. 11 illustrates multiple UEs (UE-a, UE-b to UE-n, where n is a positive integer greater than 1). Each UE performs the same processing as UE-a after receiving the denial-of-service credential, which will not be elaborated further.

At step 1102, after the on-chain node of the blockchain verifies the denial-of-service credential successfully, a smart contract is triggered to automatically deduct a corresponding percentage of fees from core network device B.

Finally, the aforementioned communication method is illustrated with reference to Embodiment 6, in which for illustrative purpose, the terminal is represented as a user, the first core network device is represented as core network B, the access network device is represented as base station b, and the second core network device is represented as core network A. In the symmetric key scheme provided in this embodiment, the user and core network B use a symmetric key for identity authentication, but operator A and operator B pre-store public keys of each other. Specifically, as illustrated in FIG. 12, the following is included.

At step 1201, core network A requests resources (such as spectrum resources) from core network B off-chain.

At step 1202, core network B uses the public key of core network A to encrypt the primary credential using a verifiable encryption algorithm. This primary credential proves the existence of a spectrum sharing billing contract between operator A and operator B. Core network B uploads the primary credential to the blockchain, triggering the generation of a smart contract, thereby supporting automatic deduction from operator A when a subsequent user uses spectrum on operator B and incurs corresponding fees.

At step 1203, after receiving a notification of the contract being uploaded to the blockchain, core network A downloads the primary credential from the blockchain.

At step 1204, when a user under the jurisdiction of core network A require resources (such as spectrum resources) of core network B, the user applies to core network A for using the resources (spectrum resources) of core network B.

At step 1205, core network A can use the primary credential to issue a secondary credential to the user, authorizing spectrum resources for the user under its jurisdiction through the secondary credential.

At step 1206, once the user a obtains the secondary credential, the user can use the secondary credential to access base station b under core network B (i.e., send an authentication request).

At step 1207, base station b sends an authorization request to core network B.

At step 1208, core network B returns a verification result (i.e., an authentication result) to base station b.

At step 1209, base station b provides the authentication result to the user, completing two-way authentication and obtaining the session key.

By adopting the above scheme, when the terminal belonging to the second network accesses the first network, the terminal sends an authentication request carrying a first credential to the network device under the first network. Since this first credential is calculated based on the key between the first core network device of the first network and the second core network device of the second network, the terminal can be authenticated on the first network side through this first credential. Thus, when the terminal needs to access other networks, the terminal can be authenticated simply through the first credential, ensuring security while improving authentication efficiency and avoiding the low efficiency caused by numerous security parameter calculations for authentication in the related art.

Furthermore, in the above scheme, since resource request and second credential issuance are performed between two core network devices in advance, multiple operator-managed networks can securely share their respective idle licensed spectrum. In addition, in the above scheme, since the terminal belonging to the network where the second core network device is located will use a temporary identifier to generate relevant information when accessing the first network, user privacy can also be protected. Furthermore, leveraging the high timeliness and decentralized characteristics of the smart contract, the terminal in the network where the second core network device is located can use spectrum resources of the first network without revealing the location, consumption records of the terminal, etc.

Furthermore, by uploading the second credential and information related to resources requested to be used by the second core network device to the blockchain, a smart contract on the blockchain can be triggered, thereby enabling whole-lease billing and achieving efficient charging. In addition, the above solution can also meet the needs of efficient spectrum sharing in the 6G era.

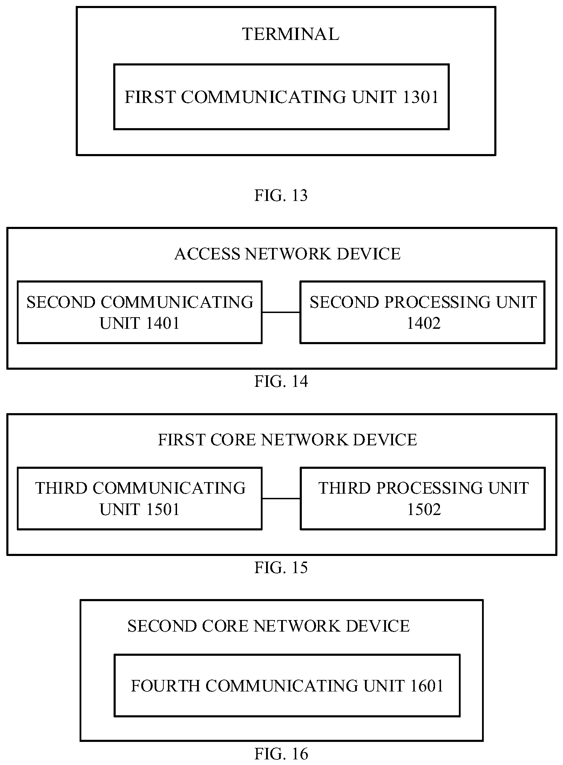

FIG. 13 is a schematic block diagram of a terminal according to an embodiment of the present disclosure. The terminal includes a first communicating unit 1301.

The first communicating unit 1301 is configured to send an authentication request to a first network device of a first network, where the authentication request carries a first credential for authenticating the terminal, the first credential is calculated based on a first key between a first core network device of the first network and a second core network device of a second network, and the terminal belongs to the second network.

The authentication request further carries a first verification code for verifying an identity of the terminal, the first verification code being calculated based on a second key between the terminal and the first core network device and the first credential.

The first verification code is calculated based on the second key, the first credential, and at least one of the following parameters: an identifier of a first resource of the first network requested to be used, a temporary identifier of the terminal, an identifier of the first network device, or a first random number.

The authentication request further carries at least one of the following: an identifier of a first resource of the first network requested to be used, a temporary identifier of the terminal, an identifier of the first network device, or a first random number.

The first communicating unit 1301 is configured to receive an authentication response from the first network device, where the authentication response carries a third key for communication between the terminal and an access network device of the first network.

The first communicating unit 1301 is configured to receive a first resource response message from the second core network device, where the first resource response message carries the first credential.

The first resource response message further carries at least one of the following: a second key between the terminal and the first core network device, or a temporary identifier of the terminal.

The first communicating unit 1301 is configured to send a first resource request message to the second core network device, where the first resource request message is used to request use of a first resource of the first network.

The first network device includes one of the following: an access network device, and the first core network device.

FIG. 14 is a schematic block diagram of an access network device according to an embodiment of the present disclosure. The access network device includes a second communicating unit 1401.

The second communicating unit 1401 is configured to receive an authentication request from a terminal, where the authentication request carries a first credential for authenticating the terminal, the first credential is calculated based on a first key between a first core network device of a first network and a second core network device of a second network, the terminal belongs to the second network, and the access network device belongs to the first network.

The authentication request further carries a first verification code for verifying an identity of the terminal.

The authentication request further carries at least one of the following: an identifier of a first resource of the first network requested to be used, a temporary identifier of the terminal, an identifier of the access network device, or a first random number.

The second communicating unit is configured to send an authorization request to the first core network device, where the authorization request carries the first credential.

The authorization request further carries at least one of the following: the identifier of the first resource, the temporary identifier of the terminal, the identifier of the access network device, or the first random number.

As illustrated in FIG. 14, the access network device further includes a second processing unit 1402. The second processing unit 1402 is configured to verify the identity of the terminal based on the first check code and the first verification code.

The second communicating unit is configured to receive an authorization response from the first core network device, where the authorization response carries a first check code.

The authorization response further carries a third key for communication between the terminal and the access network device.

The second communicating unit is configured to send an authentication response to the terminal, where the authentication response carries the third key.

FIG. 15 is a schematic block diagram of a first core network device according to an embodiment of the present disclosure. The first core network device includes a third communicating unit 1501.

The third communicating unit 1501 is configured to receive an authorization request from an access network device, where the authorization request carries a first credential for authenticating a terminal, the first credential is calculated based on a first key between the first core network device of a first network and a second core network device of a second network, the terminal belongs to the second network, and the access network device belongs to the first network.

As illustrated in FIG. 15, the first core network device includes a third processing unit 1502. The third processing unit 1502 is configured to decrypt the first credential based on the first key to obtain a decryption result; and authenticate the terminal based on the decryption result.

The decryption result includes at least one of the following: a second key between the terminal and the first core network device, or a temporary identifier of the terminal.

The third communicating unit is configured to send an authorization response to the access network device, where the authorization response carries a first check code, the first check code being calculated based on a second key between the terminal and the first core network device and the first credential.

The authorization request further carries at least one of the following: an identifier of a first resource of the first core network device requested to be used, a temporary identifier of the terminal, an identifier of the access network device, or a first random number.

The first check code is calculated based on the second key, the first credential, and at least one of the following parameters: the identifier of the first resource, the temporary identifier of the terminal, the identifier of the access network device, or the first random number.

The authorization response further carries a third key for communication between the terminal and the access network device.

The third communicating unit is configured to receive a second resource request message from the second core network device, where the second resource request message is used to request use of a second resource of the first network; and upload a second resource response message to a blockchain, where the second resource response message indicates permission for the second core network device to use the second resource of the first network, the second resource response message carries a second credential, and the second credential includes the first key encrypted based on a public key of the second core network device.

FIG. 16 is a schematic block diagram of a second core network device according to an embodiment of the present disclosure. The second core network device includes a fourth communicating unit 1601.

The fourth communicating unit 1601 is configured to send a first resource response message to a terminal, where the first resource response message carries a first credential for authenticating the terminal, the first credential is calculated based on a first key between a first core network device of a first network and a second core network device of a second network, and the terminal belongs to the second network.

The first credential is calculated based on the first key and at least one of the following parameters: a second key between the terminal and the first core network device, or a temporary identifier of the terminal.

The first resource response message further carries at least one of the following: a second key between the terminal and the first core network device, or a temporary identifier of the terminal.

The fourth communicating unit 1601 is configured to receive a first resource request message from the terminal, where the first resource request message is used to request use of a first resource of the first network.

The fourth communicating unit 1601 is configured to send a second resource request message to the first core network device, where the second resource request message is used to request use of a second resource of the first network; and download a second credential from a blockchain, where the second credential includes the first key encrypted based on a public key of the second core network device.

A first core network device according to an embodiment of the present disclosure includes a third communication unit. The third communication unit is configured to receive an authentication request from a terminal, where the authentication request carries a first credential for authenticating the terminal, the first credential is calculated based on a first key between the first core network device of a first network and a second core network device of a second network, and the terminal belongs to the second network.

The first core network device further includes a third processing unit. The third processing unit is configured to decrypt the first credential based on the first key to obtain a decryption result; and authenticate the terminal based on the decryption result.

The decryption result includes at least one of the following: a second key between the terminal and the first core network device, or a temporary identifier of the terminal.

The authentication request further carries a first verification code for verifying an identity of the terminal.

The third processing unit is configured to verify an identity of the terminal based on a first check code and a first verification code, where the first check code is calculated based on a second key between the terminal and the first core network device and the first credential.

The authentication request further carries at least one of the following: an identifier of a first resource of the first core network device requested to be used, a temporary identifier of the terminal, an identifier of the first core network device, or a first random number.

The first check code is calculated based on the second key, the first credential, and at least one of the following parameters: the identifier of the first resource, the temporary identifier of the terminal, the identifier of the first core network device, or the first random number.

The third communication unit is configured to perform at least one of: sending an authentication response to the terminal, where the authentication response carries a third key for communication between the terminal and an access network device of the first network; or sending the third key to the access network device.

The device of the embodiments of the present disclosure can realize the corresponding functions of each device in the foregoing embodiments of the communication method. The processes, functions, implementation methods, and beneficial effects of each module (sub-module, unit, or component, etc.) in the device can be found in the corresponding descriptions in the above method embodiments, and will not be repeated here. It can be noted that the functions described in the various modules (sub-modules, units, or components, etc.) of the device in the embodiments of the present disclosure can be implemented by different modules (sub-modules, units, or components, etc.) or by the same module (sub-module, unit, or component, etc.).

It can be understood that in the various embodiments of the present disclosure, the sequence numbers of the above-described processes does not imply the order of execution. The execution order of each process should be determined by its function and internal logic, and the sequence numbers should not constitute any limitation on the implementation process of the embodiments of the present disclosure.

Those skilled in the art can clearly understand that, for the convenience and brevity of description, the specific working processes of the systems, devices, and units described above can be referred to the corresponding processes in the foregoing method embodiments, and will not be repeated here.

The above descriptions are only specific implementations of the present disclosure, but the protection scope of the present disclosure is not limited thereto. Any changes or substitutions that can be easily conceived by those skilled in the art within the technical scope disclosed in the present disclosure shall all fall within the protection scope of the present disclosure. Therefore, the protection scope of the present disclosure shall be subject to the protection scope of the claims.

## Claims

1. A communication method performed by a terminal, comprising:
sending an authentication request to a first network device of a first network, wherein the authentication request carries a first credential for authenticating the terminal, the first credential is calculated based on a first key between a first core network device of the first network and a second core network device of a second network, and the terminal belongs to the second network.

2. The method of claim 1, wherein the authentication request further carries a first verification code for verifying an identity of the terminal, the first verification code being calculated based on a second key between the terminal and the first core network device and the first credential.

3. The method of claim 2, wherein the first verification code is calculated based on the second key, the first credential, and at least one of the following parameters: an identifier of a first resource of the first network requested to be used, a temporary identifier of the terminal, an identifier of the first network device, or a first random number.

4. The method of any one of claims 1 to 3, wherein the authentication request further carries at least one of the following: an identifier of a first resource of the first network requested to be used, a temporary identifier of the terminal, an identifier of the first network device, or a first random number.

5. The method of any one of claims 1 to 4, further comprising:
receiving an authentication response from the first network device, wherein the authentication response carries a third key for communication between the terminal and an access network device of the first network.

6. The method of any one of claims 1 to 5, further comprising:
receiving a first resource response message from the second core network device, wherein the first resource response message carries the first credential.

7. The method of claim 6, wherein the first resource response message further carries at least one of the following: a second key between the terminal and the first core network device, or a temporary identifier of the terminal.

8. The method of claim 6 or 7, further comprising:
sending a first resource request message to the second core network device, wherein the first resource request message is used to request use of a first resource of the first network.

9. The method of any one of claims 1 to 8, wherein the first network device comprises one of the following: an access network device, and the first core network device.

10. A communication method performed by an access network device, comprising:
receiving an authentication request from a terminal, wherein the authentication request carries a first credential for authenticating the terminal, the first credential is calculated based on a first key between a first core network device of a first network and a second core network device of a second network, the terminal belongs to the second network, and the access network device belongs to the first network.

11. The method of claim 10, wherein the authentication request further carries a first verification code for verifying an identity of the terminal.

12. The method of claim 11, wherein the authentication request further carries at least one of the following: an identifier of a first resource of the first network requested to be used, a temporary identifier of the terminal, an identifier of the access network device, or a first random number.

13. The method of claim 12, further comprising:
sending an authorization request to the first core network device, wherein the authorization request carries the first credential.

14. The method of claim 13, wherein the authorization request further carries at least one of the following: the identifier of the first resource, the temporary identifier of the terminal, the identifier of the access network device, or the first random number.

15. The method of claim 13 or 14, further comprising:
receiving an authorization response from the first core network device, wherein the authorization response carries a first check code; and
verifying the identity of the terminal based on the first check code and the first verification code.

16. The method of claim 15, wherein the authorization response further carries a third key for communication between the terminal and the access network device.

17. The method of claim 16, further comprising:
sending an authentication response to the terminal, wherein the authentication response carries the third key.

18. A communication method performed by a first core network device, comprising:
receiving an authorization request from an access network device, wherein the authorization request carries a first credential for authenticating a terminal, the first credential is calculated based on a first key between the first core network device of a first network and a second core network device of a second network, the terminal belongs to the second network, and the access network device belongs to the first network.

19. The method of claim 18, further comprising:
decrypting the first credential based on the first key to obtain a decryption result; and
authenticating the terminal based on the decryption result.

20. The method of claim 19, wherein the decryption result comprises at least one of the following: a second key between the terminal and the first core network device, or a temporary identifier of the terminal.

21. The method of claim 20, further comprising:
sending an authorization response to the access network device, wherein the authorization response carries a first check code, the first check code being calculated based on a second key between the terminal and the first core network device and the first credential.

22. The method of claim 21, wherein the authorization request further carries at least one of the following: an identifier of a first resource of the first core network device requested to be used, a temporary identifier of the terminal, an identifier of the access network device, or a first random number.

23. The method of claim 22, wherein the first check code is calculated based on the second key, the first credential, and at least one of the following parameters: the identifier of the first resource, the temporary identifier of the terminal, the identifier of the access network device, or the first random number.

24. The method of claim 22 or 23, wherein the authorization response further carries a third key for communication between the terminal and the access network device.

25. The method of any one of claims 18 to 24, further comprising:
receiving a second resource request message from the second core network device, wherein the second resource request message is used to request use of a second resource of the first network; and
uploading a second resource response message to a blockchain, wherein the second resource response message indicates permission for the second core network device to use the second resource of the first network, the second resource response message carries a second credential, and the second credential comprises the first key encrypted based on a public key of the second core network device.

26. A communication method performed by a second core network device, comprising:
sending a first resource response message to a terminal, wherein the first resource response message carries a first credential for authenticating the terminal, the first credential is calculated based on a first key between a first core network device of a first network and a second core network device of a second network, and the terminal belongs to the second network.

27. The method of claim 26, wherein the first credential is calculated based on the first key and at least one of the following parameters: a second key between the terminal and the first core network device, or a temporary identifier of the terminal.

28. The method of claim 26 or 27, wherein the first resource response message further carries at least one of the following: a second key between the terminal and the first core network device, or a temporary identifier of the terminal.

29. The method of any one of claims 26 to 28, further comprising:
receiving a first resource request message from the terminal, wherein the first resource request message is used to request use of a first resource of the first network.

30. The method of any one of claims 26 to 29, further comprising:
sending a second resource request message to the first core network device, wherein the second resource request message is used to request use of a second resource of the first network; and
downloading a second credential from a blockchain, wherein the second credential comprises the first key encrypted based on a public key of the second core network device.

31. A communication method performed by a first core network device, comprising:
receiving an authentication request from a terminal, wherein the authentication request carries a first credential for authenticating the terminal, the first credential is calculated based on a first key between the first core network device of a first network and a second core network device of a second network, and the terminal belongs to the second network.

32. The method of claim 31, further comprising:
decrypting the first credential based on the first key to obtain a decryption result; and
authenticating the terminal based on the decryption result.

33. The method of claim 32, wherein the decryption result comprises at least one of the following: a second key between the terminal and the first core network device, or a temporary identifier of the terminal.

34. The method of claim 33, wherein the authentication request further carries a first verification code for verifying an identity of the terminal.

35. The method of any one of claims 31 to 34, further comprising:
verifying an identity of the terminal based on a first check code and a first verification code, wherein the first check code is calculated based on a second key between the terminal and the first core network device and the first credential.

36. The method of claim 35, wherein the authentication request further carries at least one of the following: an identifier of a first resource of the first core network device requested to be used, a temporary identifier of the terminal, an identifier of the first core network device, and a first random number.

37. The method of claim 36, wherein the first check code is calculated based on the second key, the first credential, and at least one of the following parameters: the identifier of the first resource, the temporary identifier of the terminal, the identifier of the first core network device, or the first random number.

38. The method of any one of claims 31 to 37, further comprising at least one of:
sending an authentication response to the terminal, wherein the authentication response carries a third key for communication between the terminal and an access network device of the first network; or
sending the third key to the access network device.

39. A terminal, comprising:
a first communicating unit configured to send an authentication request to a first network device of a first network, wherein the authentication request carries a first credential for authenticating the terminal, the first credential is calculated based on a first key between a first core network device of the first network and a second core network device of a second network, and the terminal belongs to the second network.

40. An access network device, comprising:
a second communicating unit configured to receive an authentication request from a terminal, wherein the authentication request carries a first credential for authenticating the terminal, the first credential is calculated based on a first key between a first core network device of a first network and a second core network device of a second network, the terminal belongs to the second network, and the access network device belongs to the first network.

41. A first core network device, comprising:
a third communicating unit configured to receive an authorization request from an access network device, wherein the authorization request carries a first credential for authenticating a terminal, the first credential is calculated based on a first key between the first core network device of a first network and a second core network device of a second network, the terminal belongs to the second network, and the access network device belongs to the first network.

42. A second core network device, comprising:
a fourth communicating unit configured to send a first resource response message to a terminal, wherein the first resource response message carries a first credential for authenticating the terminal, the first credential is calculated based on a first key between a first core network device of a first network and a second core network device of a second network, and the terminal belongs to the second network.

43. A first core network device, comprising:
a third communicating unit configured to receive an authentication request from a terminal, wherein the authentication request carries a first credential for authenticating the terminal, the first credential is calculated based on a first key between the first core network device of a first network and a second core network device of a second network, and the terminal belongs to the second network.
